# EUROPEAN PATENT SPECIFICATION

(11) **EP 4 240 948 B1**
(45) Date of publication and mention of the grant of the patent: **09.10.2024**
(21) Application number: 20807820.4
(22) Date of filing: 06.11.2020
(51) Int. Cl.: F02B 29/04, F02B 37/013, F02M 35/10, F28D 7/00

(54) **A MOUNTING UNIT FOR A TURBOCHARGER ARRANGEMENT OF A RECIPROCATING INTERNAL COMBUSTION ENGINE, A TURBOCHARGER ARRANGEMENT AND RECIPROCATING INTERNAL COMBUSTION ENGINE**
MONTAGEEINHEIT FÜR EINE TURBOLADERANORDNUNG EINES HUBKOLBENVERBRENNUNGSMOTORS, TURBOLADERANORDNUNG UND HUBKOLBENVERBRENNUNGSMOTOR
UNITÉ DE MONTAGE POUR AGENCEMENT DE TURBOCOMPRESSEUR D'UN MOTEUR À COMBUSTION INTERNE À MOUVEMENT ALTERNATIF, AGENCEMENT DE TURBOCOMPRESSEUR ET MOTEUR À COMBUSTION INTERNE À MOUVEMENT ALTERNATIF

(43) Date of publication of application: 13.09.2023
(73) Proprietor: Wärtsilä Finland Oy, 65170 Vaasa (FI)
(72) Inventor: RAIKIO, Tero, 65170 Vaasa (FI); SANDBERG, Juho, 65170 Vaasa (FI)
(74) Representative: Boco IP Oy Ab
(86) International application number: PCT/FI2020/050734
(87) International publication number: WO 2022/096770

(56) References cited:
- EP-A1- 2 307 683
- EP-A2- 1 717 421
- WO-A1-2009/147287
- GB-A- 2 576 882
- US-A- 5 427 080
- US-B2- 8 186 159

## Description

### FIELD OF THE DISCLOSURE

The present disclosure relates to turbochargers in connection with reciprocating internal combustion piston engines, and more particularly to a mounting unit for such turbochargers. The present disclosure further concerns a turbocharger arrangement and a reciprocating internal combustion piston engine utilizing such a mounting unit.

### BACKGROUND OF THE DISCLOSURE

Turbochargers are commonly used in connection with reciprocating internal combustion piston engines so as to increase the amount of intake air usable for combustion in a combustion cylinder. In brief, a turbocharger comprises a turbine rotationally coupled to a compressor such that the turbine, driven by exhaust gasses, drives the compressor so as to charges the intake air flow.

Additionally, arrangements having more than one turbocharges coupled on after another (i.e., in series), are known to have been used for further increasing the pressure to which the intake air is charged. It is also known to use more than one turbocharger coupled in parallel to increase the flow rate of the charged intake air, as it can be seen for instance in documents EP 1717421A2 and WO 2009/147287A1.

However, increasing the number of turbochargers increases the amount of required ducting, which has conventionally resulted in a more complex structure making both assembly and maintenance more difficult for the both the turbochargers and their associated ducting. Moreover, access to any component in the vicinity of the turbochargers and their associated ducting also becomes more limited, further hindering the assembly and maintenance of the associated engine.

### BRIEF DESCRIPTION OF THE DISCLOSURE

An object of the present disclosure is to provide a mounting unit, a turbocharger arrangement equipped with such a mounting unit and a reciprocating internal combustion piston engine equipped with such a turbocharger arrangement so as to alleviate the above disadvantages.

The object of the disclosure is achieved by a mounting unit, a turbocharger arrangement and a reciprocating internal combustion piston engine, which are characterized by what is stated in the independent claims. The preferred embodiments of the disclosure are disclosed in the dependent claims.

The disclosure is based on the idea of providing the mounting unit as a single, rigid structure formed at least by a mounting base, a hot low-pressure air channel, a cool low-pressure air channel, a hot high-pressure air channel and a cool high-pressure air channel. Furthermore, at least the low-pressure turbocharger compressor outlet port and the high-pressure turbocharger compressor outlet port are arranged at the mounting base such that a low-pressure turbocharger compressor outlet and a high-pressure turbocharger compressor outlet can be directly coupled thereto, respectively, thereby mounting the low-pressure turbocharger and the high-pressure turbocharger to the mounting unit. That is, mounting unit enables rigidly attaching the low-pressure turbocharger and the high-pressure turbocharger to the mounting unit, while simultaneously achieving fluid communication between the hot low-pressure air channel and the low-pressure turbocharger compressor outlet, and the hot high-pressure air channel and the high-pressure turbocharger compressor outlet.

As a result, a simpler structure for the associated turbocharger arrangement and engine is achieved, as less ducting is required. This, in turn, translates into improved access to or at a vicinity of the turbochargers, thereby facilitating assembly and/or maintenance.

According to a first aspect of the present disclosure, a mounting unit for a turbocharger arrangement of a reciprocating internal combustion engine is provided

In the context of this disclosure, the terms low-pressure and high-pressure are used relative to each other. That is, a low-pressure entity is intended to be associated with a lower pressure than a corresponding high-pressure entity. In a similar manner, the terms hot and cool are also used relative to each other That is, a cool entity is intended to be associated with a lower temperature than a corresponding hot entity. For example, a hot low-pressure air channel is intended to be associated to an airflow at a relatively higher temperature and a lower pressure than a cool high-pressure air channel

The mounting unit comprises a longitudinally extending hot low-pressure air channel. The hot low-pressure air channel, in turn, comprises a low-pressure turbocharger compressor outlet port for providing fluid communication between a low-pressure turbocharger compressor outlet and the hot low-pressure air channel. The hot low-pressure air channel further comprises a low-pressure heat exchanger inlet port for providing fluid communication between the hot low-pressure air channel and a low-pressure heat exchanger inlet. For example, either or both of the low-pressure turbocharger compressor outlet port and the low-pressure heat exchanger inlet port may be provided as respective flanges in connection with the associated air channel.

The mounting unit further comprises a longitudinally extending cool low-pressure air channel. The cool low-pressure air channel, in turn, comprises a low-pressure heat exchanger outlet port for providing fluid communication between a low-pressure heat exchanger outlet and the cool low-pressure air channel. The cool low-pressure air channel further comprises a high-pressure turbocharger compressor inlet port for providing fluid communication between the cool low-pressure air channel and a high-pressure turbocharger compressor inlet. For example, either or both of the low-pressure heat exchanger outlet port and the high-pressure turbocharger compressor inlet port may be provided as flanges in connection with the associated air channel.

The mounting unit further comprises a longitudinally extending hot high-pressure air channel. The hot high-pressure air channel, in turn, comprises a high-pressure turbocharger compressor outlet port for providing fluid communication between a high-pressure turbocharger compressor outlet and the hot high-pressure air channel. The hot high-pressure air channel further comprises a high-pressure heat exchanger inlet port for providing fluid communication between the hot high-pressure air channel and a high-pressure heat exchanger inlet. For example, either or both of the high-pressure turbocharger compressor outlet port and the high-pressure heat exchanger inlet port may be provided as flanges in connection with the associated air channel.

The mounting unit further comprises a longitudinally extending cool high-pressure air channel. The cool high-pressure air channel, in turn, comprises a high-pressure heat exchanger outlet port for providing fluid communication between a high-pressure heat exchanger outlet and the cool high-pressure air channel. The cool high-pressure air channel further comprises a charge air feed port for providing fluid communication between the cool high-pressure air channel and a charge air inlet port of an associated engine. For example, either or both of the high-pressure heat exchanger outlet port and the charge air feed port for port may be provided as flanges in connection with the associated air channel.

The mounting unit further comprises a mounting base for attaching at least a low-pressure turbocharger and a high-pressure turbocharger to the mounting unit, most suitably in a rigid manner.

Particularly, at least the mounting base, the hot low-pressure air channel, cool low-pressure air channel, hot high-pressure air channel and the cool high-pressure air channel are provided as a single, rigid structure. For example, the mounting unit could be cast as a single piece, which is then subsequently machined so as to obtain planar surfaces where necessary (e.g., the mounting base and ports).

Most suitably, said air channels are arranged parallel with respect to each other and one next to another in a first lateral direction, transverse to the longitudinal. The mounting base, in turn, is arranged on a side of the mounting unit in a second lateral direction, transverse to the longitudinal and the first lateral directions. Preferably, the mounting base is arranged on a top side of the mounting unit, when in use.

Furthermore, at least the low-pressure turbocharger compressor outlet port and the high-pressure turbocharger compressor outlet port are arranged at the mounting base.

In this way, mechanical attachment of a low-pressure turbocharger and a high-pressure turbocharger is achieved simultaneously with fluid communication between the outlet port of the turbochargers and their respective air channels. Furthermore, as the air channels are incorporated in the mounting unit, a less complex physical structure is achieved.

According to the invention, the mounting unit is directly couplable with an identical, second mounting unit such that fluid communication between corresponding air channels of the mounting unit and the second mounting unit is achieved, when coupled. That is, fluid communication is achieved between respective hot low-pressure air channels, cool low-pressure air channels, hot high-pressure air channels and cool high-pressure air channels of a first mounting unit and a second mounting unit, when coupled to each other.

According to the invention, the hot low-pressure air channel, the cool low-pressure air channel, the hot high-pressure and the cool high-pressure air channel are arranged parallel with respect to each other, such that at least one, preferably both, longitudinal ends of said air channels are configured to be directly couplable with a longitudinal end of a corresponding air channel of an identical second mounting unit. In such an arrangement corresponding air channels of the mounting unit and the second mounting unit form continuous longitudinal air channels, when coupled. This enables mounting units to be attached one after another so as to form air channels of a desired length, and to increase the number of low-pressure turbochargers and high pressure turbocharges, so as to achieve a desired mass flow without further complicating the required ducting.

In an embodiment according to the first aspect of the present disclosure, at least the low-pressure turbocharger compressor outlet port, the high-pressure turbocharger compressor inlet port and the high-pressure turbocharger compressor outlet port are arranged on a same side of the mounting unit with respect to said air channels. As a result, coupling of the high-pressure turbocharger with its respective air channels may be achieved simultaneously with physically mounting the high-pressure turbocharger to the mounting base of the mounting unit.

In an embodiment according to the first aspect of the present disclosure, one or more, preferably all, of the low-pressure heat exchanger inlet port the low-pressure heat exchanger outlet port the high-pressure heat exchanger inlet port and the high-pressure heat exchanger outlet port are arranged at an longitudinal end of their associated air channel. This ensures, that an input or an output of a low-pressure or high-pressure heat exchanger can be coupled to its associated air channel at a longitudinal end of the mounting unit. This is particularly advantageous, because even an assembly of multiple mounting unit will always have a free end at which a heat exchanger can be coupled.

Preferably, but not necessarily, an additional low-pressure heat exchanger inlet port for providing fluid communication between the hot low-pressure air channel and a low-pressure heat exchanger inlet may be arranged at a side of the mounting unit opposite to the mounting base, with respect to said air channels in the second lateral direction. Most suitably, such an additional port may be provided at a bottom of the mounting unit, when in use.

Preferably, but not necessarily, an additional low-pressure heat exchanger outlet port for providing fluid communication between a low-pressure heat exchanger outlet and the cool low-pressure air channel may be arranged at a side of the mounting unit opposite to the mounting base, with respect to said air channels in the second lateral direction. Most suitably, such an additional port may be provided at a bottom of the mounting unit, when in use.

Preferably, but not necessarily, an additional high-pressure heat exchanger inlet port for providing fluid communication between the hot high-pressure air channel and a high-pressure heat exchanger inlet may be arranged at a side of the mounting unit opposite to the mounting base, with respect to said air channels in the second lateral direction. Most suitably, such an additional port may be provided at a bottom of the mounting unit, when in use.

Preferably, but not necessarily, an additional high-pressure heat exchanger outlet port for providing fluid communication between a high-pressure heat exchanger outlet and the cool high-pressure air channel may be arranged at a side of the mounting unit opposite to the mounting base, with respect to said air channels in the second lateral direction. Most suitably, such an additional port may be provided at a bottom of the mounting unit, when in use.

In an embodiment according to the first aspect of the present disclosure, the low-pressure hot air channel and the low-pressure cool air channel are arranged immediately adjacent to each other, whereas the high-pressure hot air channel and the high-pressure cool air channel are arranged immediately adjacent to each other.

In an embodiment according to the first aspect of the present disclosure, the low-pressure hot air channel and the high-pressure hot air channel are arranged immediately adjacent to each other.

In an embodiment according to the first aspect of the present disclosure, the high-pressure cool air channel is arranged laterally outermost with respect to the remaining air channels.

It should be noted that the first aspect of the present disclosure encompasses any combination of two or more embodiments, or variants thereof, as discussed above.

According to a second aspect of the present disclosure, a turbocharger arrangement of a reciprocating internal combustion engine is provided. The turbocharger arrangement comprises a first mounting unit being a mounting unit according to any the first aspect of the present disclosure, as discussed above.

The turbocharger arrangement further comprises a first low-pressure turbocharger. The first low-pressure turbocharger, in turn, comprises a compressor inlet couplable to an air supply. The firs low pressure turbocharger further comprises a compressor outlet directly coupled to the low-pressure turbocharger compressor outlet port of the first mounting unit. Moreover, the first low-pressure turbocharger is mounted onto the first mounting unit at the mounting base thereof.

The turbocharger arrangement further comprises a first low-pressure heat exchanger. The first low-pressure heat exchanger, in turn, comprises an inlet coupled to the low-pressure heat exchanger inlet port of the first mounting unit. The first low-pressure heat exchanger further comprises an outlet coupled to the low-pressure heat exchanger outlet port of the first mounting unit. Moreover, the first low-pressure heat exchanger is configured to cool a low-pressure airflow between the inlet and outlet thereof. For example, either or both of the first low-pressure heat exchanger inlet and outlet could be directly coupled to the low-pressure heat exchanger inlet port and the low-pressure heat exchanger outlet port of the first mounting unit, respectively. Furthermore, either or both of the low-pressure heat exchanger inlet and outlet ports could be provided at a longitudinal end of the first mounting unit. Additional low-pressure heat exchangers may naturally be provided, if necessary.

The turbocharger arrangement further comprises a first high-pressure turbocharger. The first high-pressure turbocharger, in turn, comprises a compressor inlet coupled to the high-pressure turbocharger compressor inlet port of the first mounting unit. The first high-pressure turbocharger further comprises a compressor outlet directly coupled to the high-pressure turbocharger compressor outlet port of the first mounting unit. Moreover, the first high-pressure turbocharger is mounted onto the first mounting unit at the mounting base thereof.

The turbocharger arrangement further comprises a first high-pressure heat exchanger. The first high-pressure heat exchanger, in turn, comprises an inlet coupled to the high-pressure heat exchanger inlet port of the first mounting unit. The first high-pressure heat exchanger further comprises an outlet coupled to the high-pressure heat exchanger outlet port of the first mounting unit. Moreover, the first high-pressure heat exchanger is configured to cool a high-pressure airflow between the inlet and outlet thereof. For example, the first high-pressure heat exchange could be directly coupled to either or both of the high-pressure heat exchanger inlet and outlet ports of the first mounting unit. Furthermore, either or both of the high-pressure heat exchanger inlet and outlet ports could be provided at a longitudinal end of the first mounting unit. Additional high-pressure heat exchanger may naturally be provided, if necessary.

In an embodiment of the second aspect of the present disclosure, the first mounting unit is provided as a mounting unit according to an embodiment of the first aspect of the present disclosure, or any variant thereof, in which the air channels of a first mounting unit form continuous longitudinal air channels together with corresponding air channels of a second mounting unit, when the first and second mounting units are coupled, as discussed in more detail above.

The turbocharger arrangement may further comprise second mounting unit, also provided as a mounting unit according to an embodiment of the first aspect of the present disclosure, or any variant thereof, in which the air channels of a first mounting unit form continuous longitudinal air channels together with corresponding air channels of a second mounting unit, when the first and second mounting units are coupled, as discussed in more detail above.

Particularly, the second mounting unit is coupled to the first mounting unit by the longitudinal ends of the corresponding air channels of the first mounting unit and the second mounting unit, respectively, such that corresponding air channels of the first mounting unit and the second mounting unit form continuous longitudinal air channels.

The turbocharger arrangement may further comprise a second low-pressure turbocharger. The second low-pressure turbocharger, in turn comprises a compressor inlet couplable to an air supply. The second low-pressure turbocharger further comprises a compressor outlet directly coupled to the low-pressure turbocharger compressor outlet port of the second mounting unit. Moreover, the second low-pressure turbocharger is mounted onto the second mounting unit at the mounting base thereof.

The turbocharger arrangement may further comprise a second high-pressure turbocharger. The second high-pressure turbocharger, in turn, comprises a compressor inlet coupled to the high-pressure turbocharger compressor inlet port of the second mounting unit. The second high-pressure turbocharger further comprises a compressor outlet directly coupled to the high-pressure turbocharger compressor outlet port of the second mounting unit. Moreover, the second high-pressure turbocharger is mounted onto the second mounting unit at the mounting base thereof.

The turbocharger arrangement may suitably, but not necessarily, further comprise a second low-pressure heat exchanger. The second low-pressure heat exchanger, in turn, comprises an inlet coupled to the low-pressure heat exchanger inlet port of the second mounting unit. The second low-pressure heat exchanger further comprises an outlet coupled to the low-pressure heat exchanger outlet port of the second mounting unit. Moreover, the second low-pressure heat exchanger is configured to cool a low-pressure airflow between the inlet and outlet thereof. For example, the second low-pressure heat exchanger could be directly coupled to either or both of the low-pressure heat exchanger inlet and outlet ports of the second mounting unit. Furthermore, either or both of the low-pressure heat exchanger inlet and outlet ports could be provided at a longitudinal end of the second mounting unit.

The turbocharger arrangement may suitably, but not necessarily further comprise a second high-pressure heat exchanger. The second high-pressure heat exchanger, in turn, comprises an inlet coupled to the high-pressure heat exchanger inlet port of the second mounting unit. The second high-pressure heat exchanger further comprises an outlet coupled to the high-pressure heat exchanger outlet port of the second mounting unit. Moreover, said second high-pressure heat exchanger is configured to cool a high-pressure airflow between the inlet and outlet thereof. For example, the second high-pressure heat exchanger could be directly coupled to either or both of the high-pressure heat exchanger inlet and outlet ports of the second mounting unit. Furthermore, either or both of the high-pressure heat exchanger inlet and outlet ports could be provided at a longitudinal end of the second mounting unit.

It should be noted that the second aspect of the present disclosure encompasses any combination of two or more embodiments, or variants thereof, as discussed above.

According to a third aspect of the present disclosure, a reciprocating internal combustion engine is provided. The engine comprises a turbocharger arrangement according to the second aspect of the present disclosure. Particularly, a charge air feed port of either or both of the first mounting unit and the second mounting unit is coupled to a charge air inlet of the engine.

### BRIEF DESCRIPTION OF THE DRAWINGS

In the following the disclosure will be described in greater detail by means of preferred embodiments with reference to the accompanying drawings, in which
Fig. 1 illustrates a schematic representation of a mounting unit according to an embodiment of the present disclosure, as seen as a perspective view from a side having a mounting base
Fig. 2 illustrates a schematic representation of multiple mounting units according to an embodiment of the present disclosure coupled to each other, as seen as a perspective view from a side of having a mounting base
Fig 3. illustrates the arrangement of Fig. 2 as seen as a perspective view from a side opposite to a mounting base
Fig. 4 illustrates a schematic diagram of a turbocharger arrangement according to an embodiment of the present disclosure.

### DETAILED DESCRIPTION OF THE DISCLOSURE

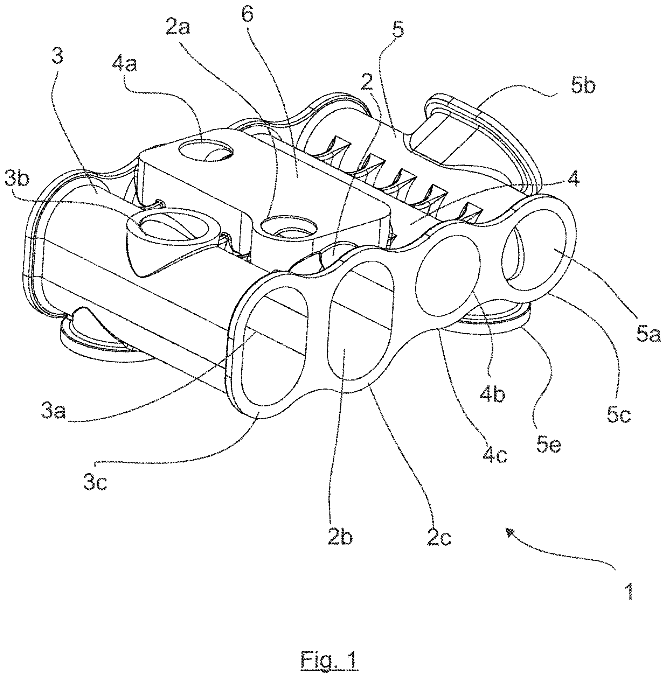

The mounting unit 1 illustrated in Fig. 1 comprises a hot low-pressure air channel 2, a cool low-pressure air channel 3, a hot high-pressure air channel 4, and a cool high-pressure air channel 5, all of which have a tubular cross-sectional shape, and extend longitudinally and parallel with each other. The air channels 2, 3, 4, 5 are arranged parallel with respect to each other and one next another in a first lateral direction, transverse to the longitudinal. The mounting unit further comprises a mounting base 6 for attaching at least a low-pressure turbocharger and a high-pressure turbocharger to the mounting unit. The mounting base 6 is arranged on a side of the mounting unit 1 in a second lateral direction, transverse to the longitudinal and the first lateral directions.

Particularly, the mounting base 6, the hot low-pressure air channel 2, cool low-pressure air channel 3, hot high-pressure air channel 4 and the cool high-pressure air channel 5 are provided as a single, rigid structure. The air channels 2, 3, 4, 5 are arranged parallel with respect to each other and one next to another in a first lateral direction, transverse to the longitudinal. The mounting base 6 is arranged on a side of the mounting unit 1 in a second lateral direction, transverse to the longitudinal and the first lateral directions. The hot low-pressure air channel 2 has a low-pressure turbocharger compressor outlet port 2a provided at the mounting base 6. The hot low-pressure air channel 2 also has two opposing longitudinal ends 2c, 2d each with a flanged annular end surface, either of which may serve as a low-pressure heat exchanger inlet port 2b.

The cool low-pressure air channel 3 has two opposing longitudinal ends 3c, 3d each with a flanged annular end surface, either or which may serve as a low-pressure heat-exchanger outlet port 3a. The cool low-pressure air channel 3 also has a high-pressure turbocharger compressor inlet port 3b provided on the same side of the mounting unit 1 as the mounting base 6, separate therefrom.

The hot high-pressure air channel 4 has a high-pressure turbocharger compressor outlet port 4a provided at the mounting base 6. The hot high-pressure air channel 4 also has two opposing longitudinal ends 4c, 4d, each with a flanged annular end surface, either of which may serve as a high-pressure heat exchanger inlet port 4b

The cool high-pressure air channel 5 has two opposing longitudinal ends 5c, 5d, each with a flanged annular end surface, either or which may serve as a high-pressure heat-exchanger outlet port 5a. The cool high-pressure air channel 5 also has a charge air feed port 5b, extending in the first lateral direction from the associated air channel 5 at an inclination with respect to said first lateral direction. In the embodiment of Fig. 1, the high-pressure cool air channel 5 is arranged laterally outermost (i.e. in the first lateral direction) with respect to the remaining air channels 2, 3, 4, whereas the low-pressure hot air channel 2 and the high-pressure hot air channel 4 are arranged immediately adjacent to each other.

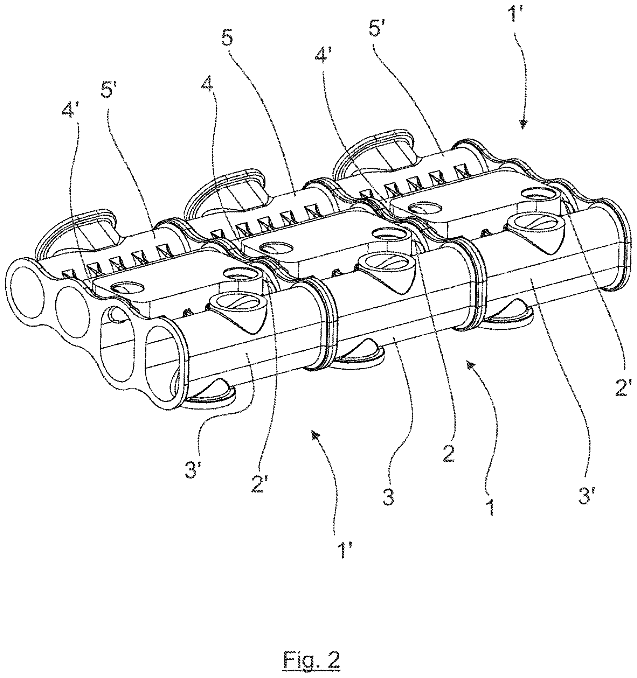

Fig. 2 illustrates a schematic representation of multiple mounting units of Fig. 1 coupled to each other, as seen as a perspective view from a side of having a mounting base, showing the charge air feed port 5b. Particularly, the arrangement has a mounting unit 1, coupled to identical mounting units 1' at each longitudinal end thereof.

Particularly, the hot low-pressure air channel 2 is coupled at both of its longitudinal ends 2c, 2d to corresponding longitudinal ends 2c', 2d' of corresponding low-pressure air channels 2', so as to form a continuous longitudinal hot low-pressure air channel 2', 2, 2'. In a similar manner, the cool low-pressure air channel 3 is coupled at both of its longitudinal ends 3c, 3d to corresponding longitudinal ends 3c', 3d' of corresponding cool low-pressure air channels 3', so as to form a continuous longitudinal hot low-pressure air channel 3', 3, 3'.

In a similar manner, the hot high-pressure air channel 4 is coupled at both of its longitudinal ends 4c, 4d to corresponding longitudinal ends 4c', 4d' of corresponding hot high-pressure air channels 4', so as to form a continuous longitudinal hot high-pressure air channel 4', 4, 4'.

In a similar manner, the cool high-pressure air channel 5 is coupled at both of its longitudinal ends 5c, 5d to corresponding longitudinal ends 5c', 5d' of corresponding cool high-pressure air channels 5', so as to form a continuous longitudinal cool high-pressure air channel 5', 5, 5'.

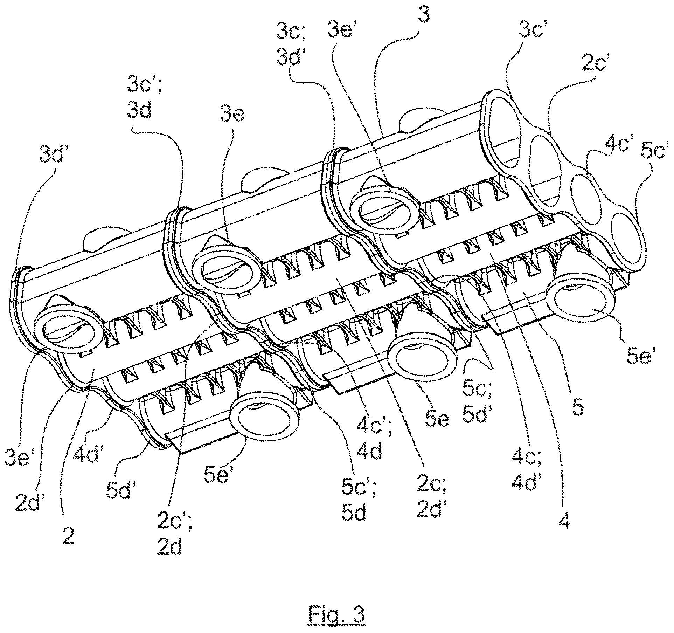

Fig. 3 shows the arrangement of Fig. 2 as seen from a side of the mounting units 1', 1, 1' opposite to the mounting bases 6', 6, 6. Particularly, Fig. 3 illustrates the cool low-pressure air channels 3', 3, 3' also being equipped with additional an low-pressure heat exchanger outlet ports 3e', 3e, 3e' provided on a side of the respective mounting units 1', 1, 1' opposite to the mounting bases 6', 6, 6'. In a similar manner, the cool high-pressure air channels 5', 5, 5' are equipped additional high-pressure heat exchanger outlet ports 5e', 5e, 5e'. It should be noted that such additional ports may also be provided on single mounting units 1, even without being attached to each other.

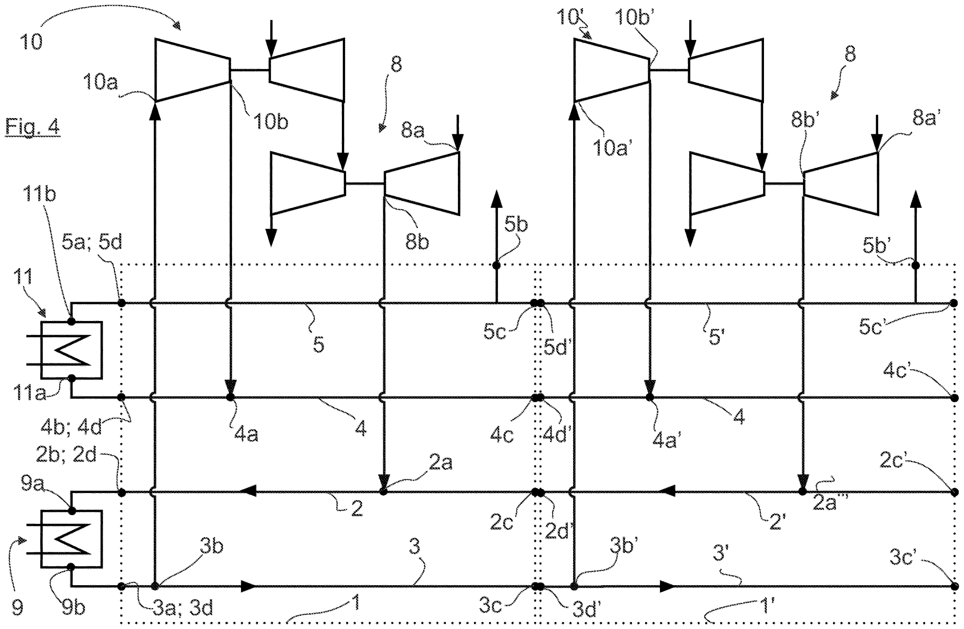

Fig. 4 illustrates a schematic diagram of a turbocharger arrangement according to an embodiment of the present disclosure. Particularly, it shows how the hot low-pressure air channels 2, 2' of the first mounting unit 1 and the second mounting unit 1' are coupled to each other at their corresponding longitudinal ends 2c, 2d' to form a uniform air channel. In a similar manner, the cool low-pressure air channels 3, 3' are coupled at their corresponding longitudinal ends 3c, 3d', the hot high-pressure channels 4, 4' are coupled by their corresponding longitudinal lends 4c, 4d' and the cool low-pressure channels 5, 5' are coupled to each other at their corresponding longitudinal lends 5c, 5d'.

The compressor outlet 8b of the first low-pressure turbocharger 8 and the compressor outlet 8b' of the second low-pressure turbocharger 8' are both coupled to the uniform hot low-pressure air channel 2, 2' by the low-pressure turbocharger compressor outlet port 2a of the first mounting unit 1 and the low-pressure turbocharger compressor outlet port 2a' of the first mounting unit 1'. That is, both the first and second low-pressure turbochargers feed the uniform hot low-pressure air channel 2, 2', which is then coupled to the low-pressure heat exchanger inlet 9a of a common low-pressure heat exchanger 9 at the low-pressure heat exchanger inlet port 2b, provided at an longitudinal end 2d (being opposite to the longitudinal end 2c, at which the second mounting unit 1' is coupled).

The low-pressure heat exchanger outlet 9b of the common low-pressure heat exchanger 9 is coupled to the uniform cool low-pressure air channel 3, 3', formed by the respective air channels 3, 3' of the first and second mounting units 1, 1', at the low-pressure heat exchanger outlet port 3as, formed at a longitudinal end 3d (being opposite to the longitudinal end 3c, at which the second mounting unit 1' is coupled).

The uniform cool low-pressure air channel 3, 3' is coupled to the compressor inlets 10a, 10a' of both the first high-pressure turbocharger 10 and the second high pressure turbocharger 10' at the high-pressure turbocharger inlet ports 3b, 3b' of the first and second mounting units 1, 1', respectively.

The compressor outlets 10b and 10b' of the high-pressure turbocharger are coupled to the uniform hot high-pressure air channel 4, 4' at the high-pressure turbocharger outlet ports 4a, 4a', thereof. Furthermore, the inlet 11a of the common high-pressure heat exchanger 11 is couple to the uniform hot high-pressure air channel 4, 4' at the high-pressure heat exchanger inlet port 4b formed at a longitudinal end 4d (being opposite to the longitudinal end 4c, at which the second mounting unit 1' is coupled).

The high-pressure heat exchanger outlet 11b of the common high-pressure heat exchanger 11 is coupled to the uniform cool high-pressure air channel 5, 5' at the high-pressure heat exchanger outlet port 5a, formed at a longitudinal end 5d (being opposite to the longitudinal end 5c, at which the second mounting unit 1' is coupled).

The charge air feed port 5b of the high-pressure air channel 5, 5' may then be further coupled to a charge air inlet of an associated engine.

## Claims

1. A mounting unit (1) for a turbocharger arrangement of a reciprocating internal combustion engine, comprising
a longitudinally extending hot low-pressure air channel (2) having:
- a low-pressure turbocharger compressor outlet port (2a) for providing fluid communication between a low-pressure turbocharger compressor outlet and the hot low-pressure air channel (2), and
- a low-pressure heat exchanger inlet port (2b) for providing fluid communication between the hot low-pressure air channel (2) and a low-pressure heat exchanger inlet;
a longitudinally extending cool low-pressure air channel (3) having:
- a low-pressure heat exchanger outlet port (3a) for providing fluid communication between a low-pressure heat exchanger outlet and the cool low-pressure air channel (3), and
- a high-pressure turbocharger compressor inlet port (3b) for providing fluid communication between the cool low-pressure air channel (3) and a high-pressure turbocharger compressor inlet;
a longitudinally extending hot high-pressure air channel (4) having:
- a high-pressure turbocharger compressor outlet port (4a) for providing fluid communication between a high-pressure turbocharger compressor outlet and the hot high-pressure air channel (4), and
- a high-pressure heat exchanger inlet port (4b) for providing fluid communication between the hot high-pressure air channel (4) and a high-pressure heat exchanger inlet; and
a longitudinally extending cool high-pressure air channel (5) having:
- a high-pressure heat exchanger outlet port (5a) for providing fluid communication between a high-pressure heat exchanger outlet and the cool high-pressure air channel (5), and
- a charge air feed port (5b) for providing fluid communication between the cool high-pressure air channel (5) and a charge air inlet of an associated engine,
wherein the mounting unit (1) further comprises a mounting base (6) for attaching at least a low-pressure turbocharger and a high-pressure turbocharger to the mounting unit (1),
wherein the mounting base (6), the hot low-pressure air channel (2), cool low-pressure air channel (3), hot high-pressure air channel (4) and the cool high-pressure air channel (5) are provided as a single, rigid structure,
wherein said air channels (2, 3, 4, 5) are arranged parallel with respect to each other and one next to another in a first lateral direction, transverse to the longitudinal,
wherein the mounting base (6) is arranged on a side of the mounting unit (1) in a second lateral direction, transverse to the longitudinal and the first lateral directions, and
wherein at least the low-pressure turbocharger compressor outlet port (2a) and the high-pressure turbocharger compressor outlet port (4a) are arranged at the mounting base (6),
**characterized in that** the mounting unit (1) is directly couplable with an identical, second mounting unit (1') such that fluid communication between corresponding air channels (2, 2'; 3, 3'; 4,4'; 5, 5') of the mounting unit (1) and the second mounting (1') unit is achieved, when coupled, wherein said air channels (2, 3, 4, 5) are arranged parallel with respect to each other, and
wherein at least one, preferably both, longitudinal ends (2c, 2d,i 3c, 3d, 4c, 4d, 5c, 5d) of said air channels (2, 3, 4, 5) are configured to be directly couplable with a longitudinal end (2c' 2d', 3c' 3d', 4c' 4d', 5c' 5d') of a corresponding air channel (2', 3', 4', 5') of an identical second mounting unit (1'), such that corresponding air channels (2; 2', 3; 3', 4; 4', 5; 5') of the mounting unit (1) and the second mounting unit (1') form continuous longitudinal air channels, when coupled.

2. The mounting unit according to Claim 1, **characterized in that** at least the low-pressure turbocharger compressor outlet port (2a), the high-pressure turbocharger compressor inlet port (3b) and the high-pressure turbocharger compressor outlet port (4a) are arranged on a same side of the mounting unit with respect to said air channels (2, 3, 4, 5).

3. The mounting unit (1) according to Claim 1 or 2, **characterized in that** one or more, preferably all, of the low-pressure heat exchanger inlet port (2b), the low-pressure heat exchanger outlet port (3a), the high-pressure heat exchanger inlet port (4b) and the high-pressure heat exchanger outlet port (5a) are arranged at an longitudinal end (2c, 2d, 3c, 3d, 4c, 4d, 5c, 5d) of their associated air channel (2, 3, 4, 5).

4. The mounting unit (1) according to Claim 3, **characterized in that** one or more, preferably all, of
- an additional low-pressure heat exchanger inlet port for providing fluid communication between the hot low-pressure air channel (2) and a low-pressure heat exchanger inlet;
- an additional low-pressure heat exchanger outlet port (3e) for providing fluid communication between a low-pressure heat exchanger outlet and the cool low-pressure air channel (3);
- an additional high-pressure heat exchanger inlet port (4e) for providing fluid communication between the hot high-pressure air channel (4) and a high-pressure heat exchanger inlet, and
- an additional high-pressure heat exchanger outlet port (5e) for providing fluid communication between a high-pressure heat exchanger outlet and the cool high-pressure air channel (5),
are arranged at a side of the mounting unit opposite to the mounting base (6), with respect to said air channels in the second lateral direction.

5. The mounting unit according to any of the preceding Claims 1-4, **characterized in that** the low-pressure hot air channel (2) and the low-pressure cool air channel (3) are arranged immediately adjacent to each other, whereas the high-pressure hot air (4) channel and the high-pressure cool air channel (5) are arranged immediately adjacent to each other.

6. The mounting unit according to any of the preceding Claims 1-5, **characterized in that** the low-pressure hot air channel (2) and the high-pressure hot air channel (4) are arranged immediately adjacent to each other.

7. The mounting unit (1) according to any of the preceding Claim 1-6, **characterized in that** the high-pressure cool air channel (5) is arranged laterally outermost with respect to the remaining air channels (2, 3, 4).

8. A turbocharger arrangement (7) of a reciprocating internal combustion engine, **characterized by** comprising
a first mounting unit (1) according to any of the preceding Claim 1-7;
a first low-pressure turbocharger (8) having:
- a compressor inlet (8a) couplable to an air supply, and
- a compressor outlet (8b) directly coupled to the low-pressure turbocharger compressor outlet port (2a) of the first mounting unit (1), the first low-pressure turbocharger (8) being mounted onto the first mounting unit (1) at the mounting base (6) thereof;
a first low-pressure heat exchanger (9) having:
- an inlet (9a) coupled to the low-pressure heat exchanger inlet port (2b) of the first mounting unit (1), and
- an outlet (9b) coupled to the low-pressure heat exchanger outlet port (3a) of the first mounting unit, said first low-pressure heat exchanger (9) being configured to cool a low-pressure airflow between the inlet (9a) and outlet (9b) thereof;
a first high-pressure turbocharger (10) having:
- a compressor inlet (10a) coupled to the high-pressure turbocharger compressor inlet port (3b) of the first mounting unit (1), and
- a compressor outlet (10b) directly coupled to the high-pressure turbocharger compressor outlet port (4a) of the first mounting unit (1), the first high-pressure turbocharger (10) being mounted onto the first mounting unit (1) at the mounting base (6) thereof, and
a first high-pressure heat exchanger (11) having:
- an inlet (11a) coupled to the high-pressure heat exchanger inlet port (4b) of the first mounting unit (1), and
- an outlet (11b) coupled to the high-pressure heat exchanger outlet port (5a) of the first mounting unit (1), said first high-pressure heat exchanger (11) being configured to cool a high-pressure airflow between the inlet (11a) and outlet (11b) thereof.

9. The turbocharger arrangement according to Claim 8, **characterized in that** the first mounting unit (1) is a mounting unit according to any of the preceding claims 3-7, wherein the turbocharger arrangement further comprises:
a second mounting unit (1') being also a mounting unit according to any of the preceding claims 3-7, coupled to the first mounting unit (1) by the longitudinal ends (2c; 2c', 2d; 2d', 3c; 3c', 3d; 3d', 4c; 4c', 4d; 4d', 5c; 5c', 5d; 4d') of the corresponding air channels (2; 2', 3, 3'; 4,4'; 5, 5') of the first mounting unit and the second mounting unit (1'), respectively, such that corresponding air channels (2; 2', 3, 3'; 4,4'; 5, 5') of the first mounting (1) unit and the second mounting unit (1') form continuous longitudinal air channels;
a second low-pressure turbocharger (8') having:
- a compressor inlet (8a') couplable to an air supply, and
- a compressor outlet (8b') directly coupled to the low-pressure turbocharger compressor outlet port (2a') of the second mounting unit (1'), the second low-pressure turbocharger (8`) being mounted onto the second mounting unit (1') at the mounting base (6') thereof, and
a second high-pressure turbocharger (10') having:
- a compressor inlet (10a') coupled to the high-pressure turbocharger compressor inlet port (3b') of the second mounting unit (1'), and
- a compressor outlet (10b') directly coupled to the high-pressure turbocharger compressor outlet port (4a') of the second mounting unit (1'), the second high-pressure turbocharger (10') being mounted onto the second mounting unit (1') at the mounting base (6') thereof.

10. The turbocharger arrangement according to Claim 9, **characterized in that** the turbocharger arrangement further comprises:
a second low-pressure heat exchanger (9') having:
- an inlet (9a') coupled to the low-pressure heat exchanger inlet port (2b') of the second mounting unit (1'), and
- an outlet (9b') coupled to the low-pressure heat exchanger outlet port (3a') of the second mounting unit (1'), said second low-pressure heat exchanger (9') being configured to cool a low-pressure airflow between the inlet (9a') and outlet (9b') thereof, and
a second high-pressure heat exchanger (11) having:
- an inlet (11a') coupled to the high-pressure heat exchanger inlet port (4b') of the second mounting unit (1'), and
- an outlet (11b') coupled to the high-pressure heat exchanger outlet port (5b') of the second mounting unit (1'), said second high-pressure heat exchanger (11') being configured to cool a high-pressure airflow between the inlet (11a') and outlet (11b') thereof.

11. A reciprocating internal combustion engine, **characterized by** comprising the turbocharger arrangement according to any of the preceding Claims 8-10,
wherein a charge air feed port (5b, 5b') of either or both of the first mounting unit (1) and the second mounting unit (1') being coupled to a charge air inlet of the engine.

## Patentansprüche

1. Montageeinheit (1) für eine Turbolader-Anordnung einer Hubkolben-Brennkraftmaschine, umfassend
einen längs verlaufenden Niederdruck-Heißluftkanal (2) mit:
- einer Niederdruckturboladerverdichter-Auslassöffnung (2a) zum Bereitstellen einer Fluidverbindung zwischen einem Niederdruckturboladerverdichter-Auslass und dem Niederdruck-Heißluftkanal (2), und
- einer Niederdruckwärmetauscher-Einlassöffnung (2b) zum Bereitstellen einer Fluidverbindung zwischen dem Niederdruck-Heißluftkanal (2) und einem Niederdruckwärmetauscher-Einlass;
einen längs verlaufenden Niederdruck-Kaltluftkanal (3) mit:
- einer Niederdruckwärmetauscher-Auslassöffnung (3a) zum Bereitstellen einer Fluidverbindung zwischen einem Niederdruckwärmetauscher-Auslass und dem Niederdruck-Kaltluftkanal (3), und
- einer Hochdruckturboladerverdichter-Einlassöffnung (3b) zum Bereitstellen einer Fluidverbindung zwischen dem Niederdruck-Kaltluftkanal (3) und einem Hochdruckturboladerverdichter-Einlass;
einen längs verlaufenden Hochdruck-Heißluftkanal (4) mit:
- einer Hochdruckturboladerverdichter-Auslassöffnung (4a) zum Bereitstellen einer Fluidverbindung zwischen einem Hochdruckturboladerverdichter-Auslass und dem Hochdruck-Heißluftkanal (4), und
- einer Hochdruckwärmetauscher-Einlassöffnung (4b) zum Bereitstellen einer Fluidverbindung zwischen dem Hochdruck-Heißluftkanal (4) und einem Hochdruckwärmetauscher-Einlass; und
einen längs verlaufenden Hochdruck-Kaltluftkanal (5) mit:
- einer Hochdruckwärmetauscher-Auslassöffnung (5a) zum Bereitstellen einer Fluidverbindung zwischen einem Hochdruckwärmetauscher-Auslass und dem Hochdruck-Kaltluftkanal (5), und
- einer Ladeluftzufuhröffnung (5b) zum Bereitstellen einer Fluidverbindung zwischen dem Hochdruck-Kaltluftkanal (5) und einem Ladelufteinlass einer zugehörigen Brennkraftmaschine,
wobei die Montageeinheit (1) ferner einen Montagesockel (6) umfasst, um mindestens einen Niederdruckturbolader und einen Hochdruckturbolader an der Montageeinheit (1) zu befestigen,
wobei der Montagesockel (6), der Niederdruck-Heißluftkanal (2), der Niederdruck-Kaltluftkanal (3), der Hochdruck-Heißluftkanal (4) und der Hochdruck-Kaltluftkanal (5) als eine einzige, starre Struktur vorgesehen sind,
wobei die Luftkanäle (2, 3, 4, 5) parallel zueinander und nebeneinander in einer ersten Seitenrichtung, quer zur Längsrichtung, angeordnet sind,
wobei der Montagesockel (6) auf einer Seite der Montageeinheit (1) in einer zweiten Seitenrichtung, quer zur Längs- und ersten Seitenrichtung, angeordnet ist, und
wobei mindestens die Niederdruckturboladerverdichter-Auslassöffnung (2a) und die Hochdruckturboladerverdichter-Auslassöffnung (4a) am Montagesockel (6) angeordnet sind,
**gekennzeichnet dadurch, dass** die Montageeinheit (1) mit einer identischen, zweiten Montageeinheit (1') direkt koppelbar ist, so dass, wenn gekoppelt, eine Fluidverbindung zwischen entsprechenden Luftkanälen (2, 2'; 3, 3'; 4,4'; 5, 5') der Montageeinheit (1) und der zweiten Montageeinheit (1') erzielt wird, wobei die Luftkanäle (2, 3, 4, 5) parallel zueinander angeordnet sind, und
wobei mindestens ein, bevorzugt beide Längsenden (2c, 2d, 3c, 3d, 4c, 4d, 5c, 5d) der Luftkanäle (2, 3, 4, 5) so ausgelegt sind, dass sie mit einem Längsende (2c' 2d', 3c' 3d', 4c' 4d', 5c' 5d') eines entsprechenden Luftkanals (2', 3', 4', 5') einer identischen zweiten Montageeinheit (1') direkt koppelbar sind, so dass die entsprechenden Luftkanäle (2; 2', 3; 3', 4; 4', 5; 5') der Montageeinheit (1) und der zweiten Montageeinheit (1'), wenn gekoppelt, durchgehende längsverlaufende Luftkanäle bilden.

2. Montageeinheit nach Anspruch 1, **gekennzeichnet dadurch, dass** mindestens die Niederdruckturboladerverdichter-Auslassöffnung (2a), die Hochdruckturboladerverdichter-Einlassöffnung (3b) und die Hochdruckturboladerverdichter-Auslassöffnung (4a) in Bezug auf die Luftkanäle (2, 3, 4, 5) auf einer gleichen Seite der Montageeinheit angeordnet sind.

3. Montageeinheit (1) nach Anspruch 1 oder 2, **gekennzeichnet dadurch, dass** eine oder mehrere, bevorzugt sämtliche, der Niederdruckwärmetauscher-Einlassöffnung (2b), Niederdruckwärmetauscher-Auslassöffnung (3a), Hochdruckwärmetauscher-Einlassöffnung (4b) und Hochdruckwärmetauscher-Auslassöffnung (5a) an einem Längsende (2c, 2d, 3c, 3d, 4c, 4d, 5c, 5d) ihres zugehörigen Luftkanals (2, 3, 4, 5) angeordnet sind.

4. Montageeinheit (1) nach Anspruch 3, **gekennzeichnet dadurch, dass**, eine oder mehrere, bevorzugt sämtliche:
- eine zusätzliche Niederdruckwärmetauscher-Einlassöffnung zum Bereitstellen einer Fluidverbindung zwischen dem Niederdruck-Heißluftkanal (2) und einem Niederdruckwärmetauscher-Einlass;
- eine zusätzliche Niederdruckwärmetauscher-Auslassöffnung (3e) zum Bereitstellen einer Fluidverbindung zwischen einem Niederdruckwärmetauscher-Auslass und dem Niederdruck-Kaltluftkanal (3);
- eine zusätzliche Hochdruckwärmetauscher-Einlassöffnung (4e) zum Bereitstellen einer Fluidverbindung zwischen dem Hochdruck-Heißluftkanal (4) und einem Hochdruckwärmetauscher-Einlass, und
- eine zusätzliche Hochdruckwärmetauscher-Auslassöffnung (5e) zum Bereitstellen einer Fluidverbindung zwischen einem Hochdruckwärmetauscher-Auslass und dem Hochdruck-Kaltluftkanal (5),
in Bezug auf die Luftkanäle in der zweiten Seitenrichtung an einer dem Montagesockel (6) entgegengesetzten Seite der Montageeinheit angeordnet sind.

5. Montageeinheit nach einem der vorhergehenden Ansprüche 1 bis 4, **gekennzeichnet dadurch, dass** der Niederdruck-Heißluftkanal (2) und der Niederdruck-Kaltluftkanal (3) unmittelbar angrenzend zueinander angeordnet sind, während der Hochdruck-Heißluftkanal (4) und der Hochdruck-Kaltluftkanal (5) unmittelbar angrenzend zueinander angeordnet sind.

6. Montageeinheit nach einem der vorhergehenden Ansprüche 1 bis 5, **gekennzeichnet dadurch, dass** der Niederdruck-Heißluftkanal (2) und der Hochdruck-Heißluftkanal (4) unmittelbar angrenzend zueinander angeordnet sind.

7. Montageeinheit (1) nach einem der vorhergehenden Ansprüche 1 bis 6, **gekennzeichnet dadurch, dass** der Hochdruck-Kaltluftkanal (5) in Bezug auf die übrigen Luftkanäle (2, 3, 4) seitlich ganz außen angeordnet ist.

8. Turbolader-Anordnung (7) einer Hubkolben-Brennkraftmaschine, **gekennzeichnet dadurch, dass** sie umfasst
eine erste Montageeinheit (1) nach einem der vorhergehenden Ansprüche 1 bis 7;
einen ersten Niederdruckturbolader (8) mit:
- einem Verdichtereinlass (8a), der mit einer Luftversorgung koppelbar ist, und
- einem Verdichterauslass (8b), der mit der Niederdruckturboladerverdichter-Auslassöffnung (2a) der ersten Montageeinheit (1) direkt gekoppelt ist, wobei der erste Niederdruckturbolader (8) auf die erste Montageeinheit (1) an deren Montagesockel (6) montiert wird;
einen ersten Niederdruckwärmetauscher (9) mit:
- einem Einlass (9a), der mit der Niederdruckwärmetauscher-Einlassöffnung (2b) der ersten Montageeinheit (1) gekoppelt ist, und
- einem Auslass (9b), der mit der Niederdruckwärmetauscher-Auslassöffnung (3a) der ersten Montageeinheit gekoppelt ist, wobei der erste Niederdruckwärmetauscher (9) dazu ausgelegt ist, einen Niederdruckluftstrom zwischen seinem Einlass (9a) und Auslass (9b) zu kühlen;
einen ersten Hochdruckturbolader (10) mit:
- einem Verdichtereinlass (10a), der mit der Hochdruckturboladerverdichter-Einlassöffnung (3b) der ersten Montageeinheit (1) gekoppelt ist, und
- einem Verdichterauslass (10b), der mit der Hochdruckturboladerverdichter-Auslassöffnung (4a) der ersten Montageeinheit (1) direkt gekoppelt ist, wobei der erste Hochdruckturbolader (10) auf die erste Montageeinheit (1) an deren Montagesockel (6) montiert wird, und
einen ersten Hochdruckwärmetauscher (11) mit:
- einem Einlass (11a), der mit der Hochdruckwärmetauscher-Einlassöffnung (4b) der ersten Montageeinheit (1) gekoppelt ist, und
- einem Auslass (11b), der mit der Hochdruckwärmetauscher-Auslassöffnung (5a) der ersten Montageeinheit (1) gekoppelt ist, wobei der erste Hochdruckwärmetauscher (11) dazu ausgelegt ist, einen Hochdruckluftstrom zwischen seinem Einlass (11a) und Auslass (11b) zu kühlen.

9. Turbolader-Anordnung nach Anspruch 8, **gekennzeichnet dadurch, dass** die erste Montageeinheit (1) eine Montageeinheit nach einem der vorhergehenden Ansprüche 3 bis 7 ist,
wobei die Turbolader-Anordnung ferner umfasst:
eine zweite Montageeinheit (1'), bei der es sich auch um eine Montageeinheit nach einem der vorhergehenden Ansprüche 3 bis 7 handelt, die mit der ersten Montageeinheit (1) über die Längsenden (2c; 2c', 2d; 2d', 3c; 3c', 3d; 3d', 4c; 4c', 4d; 4d', 5c; 5c', 5d; 4d') der entsprechenden Luftkanäle (2; 2', 3, 3'; 4,4'; 5, 5') der ersten Montageeinheit beziehungsweise zweiten Montageeinheit (1') gekoppelt ist, so dass die entsprechenden Luftkanäle (2; 2', 3, 3'; 4,4'; 5, 5') der ersten Montageeinheit (1) und der zweiten Montageeinheit (1') durchgehende längsverlaufende Luftkanäle bilden;
einen zweiten Niederdruckturbolader (8') mit:
- einem Verdichtereinlass (8a'), der mit einer Luftversorgung koppelbar ist, und
- einem Verdichterauslass (8b'), der mit der Niederdruckturboladerverdichter-Auslassöffnung (2a') der zweiten Montageeinheit (1') direkt gekoppelt ist, wobei der zweite Niederdruckturbolader (8') auf die zweite Montageeinheit (1') an deren Montagesockel (6') montiert wird; und
einen zweiten Hochdruckturbolader (10') mit:
- einem Verdichtereinlass (10a'), der mit der Hochdruckturboladerverdichter-Einlassöffnung (3b') der zweiten Montageeinheit (1') gekoppelt ist, und
- einem Verdichterauslass (10b'), der mit der Hochdruckturboladerverdichter-Auslassöffnung (4a') der zweiten Montageeinheit (1') direkt gekoppelt ist, wobei der zweite Hochdruckturbolader (10') auf die zweite Montageeinheit (1') an deren Montagesockel (6') montiert wird.

10. Turbolader-Anordnung nach Anspruch 9, **gekennzeichnet dadurch, dass** die Turbolader-Anordnung ferner umfasst:
einen zweiten Niederdruckwärmetauscher (9') mit:
- einem Einlass (9a'), der mit der Niederdruckwärmetauscher-Einlassöffnung (2b') der zweiten Montageeinheit (1') gekoppelt ist, und
- einem Auslass (9b'), der mit der Niederdruckwärmetauscher-Auslassöffnung (3a') der zweiten Montageeinheit (1') gekoppelt ist, wobei der zweite Niederdruckwärmetauscher (9') dazu ausgelegt ist, einen Niederdruckluftstrom zwischen seinem Einlass (9a') und Auslass (9b') zu kühlen, und
einen zweiten Hochdruckwärmetauscher (11) mit:
- einem Einlass (11a'), der mit der Hochdruckwärmetauscher-Einlassöffnung (4b') der zweiten Montageeinheit (1') gekoppelt ist, und
- einem Auslass (11b'), der mit der Hochdruckwärmetauscher-Auslassöffnung (5b') der zweiten Montageeinheit (1') gekoppelt ist, wobei der zweite Hochdruckwärmetauscher (11') dazu ausgelegt ist, einen Hochdruckluftstrom zwischen seinem Einlass (11a') und Auslass (11b') zu kühlen.

11. Hubkolben-Brennkraftmaschine, **gekennzeichnet dadurch, dass** sie die Turbolader-Anordnung nach einem der vorhergehenden Ansprüche 8 bis 10 umfasst,
wobei eine Ladeluftzufuhröffnung (5b, 5b') der ersten Montageeinheit (1) und/oder der zweiten Montageeinheit (1') mit einem Ladelufteinlass der Brennkraftmaschine gekoppelt ist.

## Revendications

1. Unité de montage (1) pour un agencement de turbocompresseur d'un moteur à combustion interne à piston alternatif, comprenant
un canal d'air chaud à basse pression (2) à extension longitudinale comportant :
- un orifice de sortie de compresseur de turbocompresseur à basse pression (2a) pour fournir une communication fluidique entre une sortie de compresseur du turbocompresseur à basse pression et le canal d'air chaud à basse pression (2), et
- un orifice d'entrée d'échangeur de chaleur à basse pression (2b) pour fournir une communication fluidique entre le canal d'air chaud à basse pression (2) et une entrée d'échangeur de chaleur à basse pression;
un canal d'air froid à basse pression (3) à extension longitudinale comportant :
- un orifice de sortie d'échangeur de chaleur à basse pression (3a) pour fournir une communication fluidique entre une sortie d'échangeur de chaleur à basse pression et le canal d'air froid à basse pression (3), et
- un orifice d'entrée de compresseur de turbocompresseur à haute pression (3b) pour fournir une communication fluidique entre le canal d'air froid à basse pression (3) et une entrée de compresseur du turbocompresseur à haute pression;
un canal d'air chaud à haute pression (4) à extension longitudinale comportant :
- un orifice de sortie de compresseur de turbocompresseur à haute pression (4a) pour fournir une communication fluidique entre une sortie de compresseur du turbocompresseur à haute pression et le canal d'air chaud à haute pression (4), et
- un orifice d'entrée d'échangeur de chaleur à haute pression (4b) pour fournir une communication fluidique entre le canal d'air chaud à haute pression (4) et une entrée d'échangeur de chaleur à haute pression; et
un canal d'air froid à haute pression (5) à extension longitudinale comportant :
- un orifice de sortie d'échangeur de chaleur à haute pression (5a) pour fournir une communication fluidique entre une sortie d'échangeur de chaleur à haute pression et le canal d'air froid à haute pression (5), et
- un orifice d'amenée d'air de suralimentation (5b) pour fournir une communication fluidique entre le canal d'air froid à haute pression (5) et une entrée d'air de suralimentation d'un moteur associé,
dans lequel l'unité de montage (1) comprend également une base de montage (6) pour attacher à l'unité de montage (1) au moins un turbocompresseur à basse pression et un turbocompresseur à haute pression,
dans lequel la base de montage (6), le canal d'air chaud à basse pression (2), le canal d'air froid à basse pression (3), le canal d'air chaud à haute pression (4) et le canal d'air froid à haute pression (5) sont prévus comme une structure rigide unique,
dans lequel lesdits canaux d'air (2, 3, 4, 5) sont disposés parallèlement les uns aux autres et l'un à côté de l'autre dans une première direction latérale, transversale à la direction longitudinale,
dans lequel la base de montage (6) est disposée d'un côté de l'unité de montage (1) dans une deuxième direction latérale, transversale à la direction longitudinale et à la première direction latérale, et
dans lequel au moins l'orifice de sortie de compresseur de turbocompresseur à basse pression (2a) et l'orifice de sortie de compresseur de turbocompresseur à haute pression (4a) sont disposés à la base de montage (6),
**caractérisée en ce que** l'unité de montage (1) peut être couplée directement à une deuxième unité de montage identique (1') de telle façon qu'à l'état couplé une communication fluidique entre les canaux d'air correspondants (2, 2'; 3, 3'; 4,4'; 5, 5') de l'unité de montage (1) et de la deuxième unité de montage (1') est établie, lesdits canaux d'air (2, 3, 4, 5) étant disposés parallèlement les uns aux autres, et
dans lequel au moins une, préférablement les deux extrémités longitudinales (2c, 2d, 3c, 3d, 4c, 4d, 5c, 5d) desdits canaux d'air (2, 3, 4, 5) sont configurées de manière à pouvoir être couplées directement à une extrémité longitudinale (2c' 2d', 3c' 3d', 4c' 4d', 5c' 5d') d'un canal d'air correspondant (2', 3', 4', 5') d'une deuxième unité de montage identique (1') de telle façon que les canaux d'air correspondants (2; 2', 3; 3', 4; 4', 5; 5') de l'unité de montage (1) et de la deuxième unité de montage (1'), à l'état couplé, forment des canaux d'air longitudinaux continus.

2. Unité de montage selon la revendication 1, **caractérisée en ce qu'**au moins l'orifice de sortie de compresseur de turbocompresseur à basse pression (2a), l'orifice d'entrée de compresseur de turbocompresseur à haute pression (3b) et l'orifice de sortie de compresseur de turbocompresseur à haute pression (4a) sont disposés d'un même côté de l'unité de montage par rapport auxdits canaux d'air (2, 3, 4, 5).

3. Unité de montage (1) selon la revendication 1 ou 2, **caractérisée en ce que** un ou plusieurs, préférablement l'ensemble des, orifice d'entrée d'échangeur de chaleur à basse pression (2b), orifice de sortie d'échangeur de chaleur à basse pression (3a), orifice d'entrée d'échangeur de chaleur à haute pression (4b) et orifice de sortie d'échangeur de chaleur à haute pression (5a) sont disposés à une extrémité longitudinale (2c, 2d, 3c, 3d, 4c, 4d, 5c, 5d) de leur canal d'air associé (2, 3, 4, 5).

4. Unité de montage (1) selon la revendication 3, **caractérisée en ce que** un ou plusieurs, préférablement l'ensemble, de
- un orifice d'entrée d'échangeur de chaleur à basse pression supplémentaire pour fournir une communication fluidique entre le canal d'air chaud à basse pression (2) et une entrée d'échangeur de chaleur à basse pression;
- un orifice de sortie d'échangeur de chaleur à basse pression supplémentaire (3e) pour fournir une communication fluidique entre une sortie d'échangeur de chaleur à basse pression et le canal d'air froid à basse pression (3);
- un orifice d'entrée d'échangeur de chaleur à haute pression supplémentaire (4e) pour fournir une communication fluidique entre le canal d'air chaud à haute pression (4) et une entrée d'échangeur de chaleur à haute pression, et
- un orifice de sortie d'échangeur de chaleur à haute pression supplémentaire (5e) pour fournir une communication fluidique entre une sortie d'échangeur de chaleur à haute pression et le canal d'air froid à haute pression (5),
sont disposés d'un côté de l'unité de montage opposé à la base de montage (6), par rapport auxdits canaux d'air dans la deuxième direction latérale.

5. Unité de montage selon l'une des revendications précédentes 1 à 4, **caractérisée en ce que** le canal d'air chaud à basse pression (2) et le canal d'air froid à basse pression (3) sont disposés de manière immédiatement adjacente l'un à l'autre, tandis que le canal d'air chaud à haute pression (4) et le canal d'air froid à haute pression (5) sont disposés de manière immédiatement adjacente l'un à l'autre.

6. Unité de montage selon l'une des revendications précédentes 1 à 5, **caractérisée en ce que** le canal d'air chaud à basse pression (2) et le canal d'air chaud à haute pression (4) sont disposés de manière immédiatement adjacente l'un à l'autre.

7. Unité de montage (1) selon l'une des revendications précédentes 1 à 6, **caractérisée en ce que** le canal d'air froid à haute pression (5) est disposé latéralement le plus à l'extérieur par rapport aux canaux d'air restants (2, 3, 4).

8. Agencement de turbocompresseur (7) d'un moteur à combustion interne à piston alternatif, **caractérisé en ce qu'**il comprend
une première unité de montage (1) selon l'une des revendications précédentes 1 à 7;
un premier turbocompresseur à basse pression (8) comportant :
- une entrée de compresseur (8a) pouvant être couplée à une alimentation d'air, et
- une sortie de compresseur (8b) couplée directement à l'orifice de sortie de compresseur de turbocompresseur à basse pression (2a) de la première unité de montage (1), ledit premier turbocompresseur à basse pression (8) étant monté sur la première unité de montage (1) à la base de montage (6) de celle-ci;
un premier échangeur de chaleur à basse pression (9) comportant :
- une entrée (9a) couplée à l'orifice d'entrée d'échangeur de chaleur à basse pression (2b) de la première unité de montage (1), et
- une sortie (9b) couplée à l'orifice de sortie d'échangeur de chaleur à basse pression (3a) de la première unité de montage, ledit premier échangeur de chaleur à basse pression (9) étant configuré pour refroidir un flux d'air à basse pression entre l'entrée (9a) et la sortie (9b) de celui-ci;
un premier turbocompresseur à haute pression (10) comportant :
- une entrée de compresseur (10a) couplée à l'orifice d'entrée de compresseur de turbocompresseur à haute pression (3b) de la première unité de montage (1), et
- une sortie de compresseur (10b) couplée directement à l'orifice de sortie de compresseur de turbocompresseur à haute pression (4a) de la première unité de montage (1), ledit premier turbocompresseur à haute pression (10) étant monté sur la première unité de montage (1) à la base de montage (6) de celle-ci, et
un premier échangeur de chaleur à haute pression (11) comportant :
- une entrée (11a) couplée à l'orifice d'entrée d'échangeur de chaleur à haute pression (4b) de la première unité de montage (1), et
- une sortie (11b) couplée à l'orifice de sortie d'échangeur de chaleur à haute pression (5a) de la première unité de montage (1), ledit premier échangeur de chaleur à haute pression (11) étant configuré pour refroidir un flux d'air à haute pression entre l'entrée (11a) et la sortie (11b) de celui-ci.

9. Agencement de turbocompresseur selon la revendication 8, **caractérisé en ce que** la première unité de montage (1) est une unité de montage selon l'une des revendications précédentes 3 à 7,
ledit agencement de turbocompresseur comprenant également:
une deuxième unité de montage (1'), étant également une unité de montage selon l'une des revendications précédentes 3 à 7, couplée à la première unité de montage (1) par les extrémités longitudinales (2c; 2c', 2d; 2d', 3c; 3c', 3d; 3d', 4c; 4c', 4d; 4d', 5c; 5c', 5d; 4d') des canaux d'air correspondants (2; 2', 3, 3'; 4,4'; 5, 5') de la première unité de montage et de la deuxième unité de montage (1'), respectivement, de telle façon que les canaux d'air correspondants (2; 2', 3, 3'; 4,4'; 5, 5') de la première unité de montage (1) et de la deuxième unité de montage (1') forment des canaux d'air longitudinaux continus;
un deuxième turbocompresseur à basse pression (8') comportant :
- une entrée de compresseur (8a') pouvant être couplée à une alimentation d'air, et
- une sortie de compresseur (8b') couplée directement à l'orifice de sortie de compresseur de turbocompresseur à basse pression (2a') de la deuxième unité de montage (1'), ledit deuxième turbocompresseur à basse pression (8`) étant monté sur la deuxième unité de montage (1') à la base de montage (6') de celle-ci; et
un deuxième turbocompresseur à haute pression (10') comportant :
- une entrée de compresseur (10a') couplée à l'orifice d'entrée de compresseur de turbocompresseur à haute pression (3b') de la deuxième unité de montage (1'), et
- une sortie de compresseur (10b') couplée directement à l'orifice de sortie de compresseur de turbocompresseur à haute pression (4a') de la deuxième unité de montage (1'), ledit deuxième turbocompresseur à haute pression (10') étant monté sur la deuxième unité de montage (1') à la base de montage (6') de celle-ci.

10. Agencement de turbocompresseur selon la revendication 9, **caractérisé en ce que** l'agencement de turbocompresseur comprend également :
un deuxième échangeur de chaleur à basse pression (9') comportant :
- une entrée (9a') couplée à l'orifice d'entrée d'échangeur de chaleur à basse pression (2b') de la deuxième unité de montage (1'), et
- une sortie (9b') couplée à l'orifice de sortie d'échangeur de chaleur à basse pression (3a') de la deuxième unité de montage (1'), ledit deuxième échangeur de chaleur à basse pression (9') étant configuré pour refroidir un flux d'air à basse pression entre l'entrée (9a') et la sortie (9b') de celui-ci; et
un deuxième échangeur de chaleur à haute pression (11) comportant :
- une entrée (11a') couplée à l'orifice d'entrée d'échangeur de chaleur à haute pression (4b') de la deuxième unité de montage (1'), et
- une sortie (11b') couplée à l'orifice de sortie d'échangeur de chaleur à haute pression (5b') de la deuxième unité de montage (1'), ledit deuxième échangeur de chaleur à haute pression (11') étant configuré pour refroidir un flux d'air à haute pression entre l'entrée (11a') et la sortie (11b') de celui-ci.

11. Moteur à combustion interne à piston alternatif, **caractérisé en ce qu'**il comprend l'agencement de turbocompresseur selon l'une des revendications précédentes 8 à 10,
dans lequel un orifice d'amenée d'air de suralimentation (5b, 5b') d'une ou de chacune des première unité de montage (1) et deuxième unité de montage (1') est couplé à une entrée d'air de suralimentation du moteur.
